# EUROPÄISCHE PATENTSCHRIFT

(11) **EP 2 745 383 B1**
(45) Veröffentlichungstag und Bekanntmachung des Hinweises auf die Patenterteilung: **09.09.2020**
(21) Anmeldenummer: 12728568.2
(22) Anmeldetag: 20.06.2012
(51) Int. Cl.: H02K 3/34, H02K 3/52

(54) **WICKLUNGSTRÄGER ZUR VERWENDUNG IN EINER ELEKTRISCHEN MASCHINE SOWIE WICKLUNGSANORDNUNG**
BOBBIN FOR USE IN AN ELECTRICAL MACHINE AND WINDING ARRANGEMENT
SUPPORT D'ENROULEMENT À UTILISER DANS UNE MACHINE ÉLECTRIQUE ET AGENCEMENT D'ENROULEMENT

(30) Priorität: 16.08.2011 DE 102011081030
(43) Veröffentlichungstag der Anmeldung: 25.06.2014
(73) Patentinhaber: Robert Bosch GmbH, 70442 Stuttgart (DE)
(72) Erfinder: EWERT, Andreas, 77839 Lichtenau (DE); NOMMENSEN, Bjoern, 31848 Bad Muender (DE); LEITZ, Lukas, 76227 Karlsruhe (DE)
(86) Internationale Anmeldenummer: PCT/EP2012/061818
(87) Internationale Veröffentlichungsnummer: WO 2013/023820

(56) Entgegenhaltungen:
- DE-A1- 19 818 433
- JP-A- H10 174 378
- JP-A- H10 225 040
- JP-A- 2006 115 565

## Beschreibung

### Technisches Gebiet

Die vorliegende Erfindung betrifft elektrische Maschinen mit Spulenwicklungen, die mithilfe von Wicklungsträgern auf Komponentenzähne aufgebracht werden. Weiterhin betrifft die vorliegende Erfindung Wicklungsträger zum Aufbringen einer Spulenwicklung, insbesondere in Form von Isolierlamellen.

### Stand der Technik

Elektrische Maschinen weisen in der Regel elektromagnetische Komponenten auf, die in Form von Spulenwicklungen ausgebildet sind. Die Spulenwicklungen werden jeweils um einen oder mehrere Zähne eines Stators oder eines Läufers gewickelt, um ein Erregermagnetfeld zu erzeugen. Bei Spulenwicklungen um einen einzelnen Komponentenzahn werden Windungen der Spulenwicklung spiralförmig aufgebracht, wobei die Windungen in mehreren Lagen angeordnet sind. Eine bevorzugte Anordnung der Windungen stellt die sogenannte orthozyklische Wicklung dar. Bei einer orthozyklischen Wicklung liegen die Drähte einer Lage der Spulenwicklung zu mindestens 30% ihres Umfangs in den Tälern zwischen den einzelnen Windungen der darunter liegenden Lage.

Um eine ausreichende Isolation zwischen dem Komponentenzahn und der Spulenwicklung zu gewährleisten, werden häufig Isolierlamellen als Wicklungsträger vorgesehen, die zwischen der Spulenwicklung und dem Komponentenzahn angeordnet werden. Auch kann das Aufbringen der Spulenwicklungen auf die Komponentenzähne der elektrischen Maschine dadurch vereinfacht werden, dass die Wicklungsträger vor dem Aufsetzen auf den Komponentenzahn bewickelt werden, so dass beim Bewickeln Behinderungen durch die Statorgeometrie vermieden werden können.

Um den orthozyklischen Aufbau einer Wicklung beim Spulenwickeln zu begünstigen, werden die Wicklungsträger vorgeprägt. Die Prägestruktur der Prägung weist eine Rillenstruktur auf. Die Rillenstruktur ermöglicht ein definiertes Ablegen der ersten Lage von Windungen der Spulenwicklung, der so genannten Wurzellage. Die Breite der Rillen entspricht in der Regel dem größtmöglichen Durchmesser des eingesetzten Wicklungsdrahts oder ist an diesen angepasst. Die Dokumente DE 198 18 433 A, JP 10 225043 A, JP 10 174378 A und JP 2006 115565 A offenbaren derartige Wicklungsträger und dazugehörige Wicklungsanordnungen.

Die bisher eingesetzte Rillenstruktur mit halbrundem Querschnitt kann zu Wickelfehlern im Lagenaufbau führen, da sich die einzelnen Windungen innerhalb der Rillenstruktur durch Druck von weiteren darüber angeordneten Wicklungslagen verschieben können, insbesondere wenn die Breite der Rillenstruktur größer ist als der tatsächliche Durchmesser des Wicklungsdrahts. Dies kann vorkommen, da die Breite der Rillenstruktur in der Regel dem maximal auftretenden Durchmesser des Wicklungsdrahtes entspricht, der Wicklungsprozess und die damit einhergehende Krümmung des Wicklungsdrahts sowie die Aufspulung auf die Lieferrollen jedoch zu einer Veränderung, insbesondere zu einer Reduzierung, des tatsächlichen Durchmessers des Wicklungsdrahts führen. Dadurch kann es vorkommen, dass der Wicklungsdraht mit lediglich einem Auflagepunkt in der Rillenstruktur des Wicklungsträgers anliegt, wodurch eine Verschiebung der einzelnen Windungen in Querrichtung (d. h. in axialer Richtung der Spulenwicklung) nicht verhindert werden kann.

Dies kann zum einen zu einem Nachteil beim Wicklungsprozess führen. Zum anderen können nachfolgende Kalibrierprozesse dazu führen, dass die Windungen der gewickelten Lagen aufgespreizt werden. Bei einem Kalibrierprozess nach dem Bewickeln einer Spulenwicklung wird die vollständig gewickelte Spulenwicklung zusammengepresst, um die Windungen zu verdichten und die Aufbauchung des Wicklungsdrahts auf der Längsseite einer Rechteckspule wegzudrücken. Auch verhindert eine Auflage des Wicklungsdrahts in der Rillenstruktur an nur einem Auflagepunkt eine gleichmäßige sowie ausreichende Wärmeableitung aus dem Wicklungsdraht über den Wicklungsträger zum Komponentenzahn der elektrischen Maschine.

Es ist daher Aufgabe der vorliegenden Erfindung, die Herstellung eines orthozyklischen Lagenaufbaus beim Spulenwickeln zu vereinfachen und insbesondere die obigen Nachteile durch den Kalibrierprozess zu vermeiden sowie eine Wärmeableitung aus dem Wicklungsdraht zu verbessern.

### Offenbarung der Erfindung

Diese Aufgabe wird durch einen Wicklungsträger zur Verwendung in einer elektrischen Maschine gemäß Anspruch 1 sowie eine Wicklungsanordnung gemäß dem nebengeordneten Anspruch gelöst.

Weitere vorteilhafte Ausgestaltungen der vorliegenden Erfindung sind in den abhängigen Ansprüchen angegeben.

Gemäß einem ersten Aspekt ist ein Wicklungsträger zum definierten Aufbringen einer Spulenwicklung vorgesehen. Der Wicklungsträger umfasst:
- einen Wicklungsabschnitt zum Aufsetzen auf eine zylinderförmige Zahnkomponente;
- eine Rillenstruktur, die in mindestens einem Bereich des Wicklungsabschnitts angeordnet ist und sich quer zur Wicklungsachse erstreckt, um einen Wicklungsdraht aufzunehmen;
wobei die Rillenstruktur einen Querschnitt mit zwei einander gegenüberliegenden, geneigten ebenen Seitenflächen aufweist, die sich in Richtung einer Bodenfläche der Rillenstruktur verjüngen, wobei der Querschnitt der Rillenstruktur trapezförmig oder dreiecksförmig ist, wobei ein Winkel einer oder beider Seitenflächen zwischen 10° und 40° bezüglich einer Tiefenrichtung der Rillenstruktur beträgt.

Eine Idee des obigen Wicklungsträgers besteht darin, die Rillenstruktur so auszubilden, dass ungeachtet des durch den Fertigungsprozess variierenden Durchmessers des Wicklungsdrahts eine Auflage des Wicklungsdrahts in der Rillenstruktur an zwei Auflagepunkten (im Querschnitt gesehen) erfolgt. Dies kann dadurch gewährleistet sein, dass die Rillenstruktur mit einander gegenüberliegenden geneigten Seitenflächen ausgebildet wird. Die geneigten Seitenflächen weisen eine sich in Aufnahmerichtung verjüngende Breite auf. Der beim Wickeln eingebrachte Wicklungsdraht wird dann an den einander gegenüberliegenden Seitenflächen gehalten.

Dadurch ist es möglich sicherzustellen, dass der Wicklungsdraht mit zwei Auflagepunkten in dem Wicklungsträger gehalten ist, so dass beim Wicklungsprozess und beim nachfolgenden Kalibrierprozess die Position des Wicklungsdrahts nicht verändert werden kann. Weiterhin führt die Auflage des Wicklungsdrahts an zwei Auflagepunkten zu einer verbesserten Wärmeableitung von dem Wicklungsdraht in den Wicklungsträger.

Gemäß einer Ausführungsform kann eine Begrenzung an mindestens einem axialen Ende des Wicklungsabschnitts vorgesehen sein, die sich senkrecht in Richtung zur Wicklungsachse nach außen erstreckt.

Gemäß einem weiteren Aspekt ist eine Wicklungsanordnung mit dem obigen Wicklungsträger vorgesehen, wobei ein Wicklungsdraht in die Rillenstruktur des Wicklungsabschnitt eingebracht ist.

Weiterhin können der Durchmesser des Wicklungsdrahts und der Querschnitt der Rillenstruktur so aufeinander abgestimmt sein, dass der Wicklungsdraht an beiden Seitenflächen anliegt.

Zwischen dem Wicklungsdraht und einer Bodenfläche der Rillenstruktur kann ein Abstand vorgesehen sein.

Alternativ kann der Wicklungsdraht eine Bodenfläche der Rillenstruktur berühren und unter Verformung der Seitenflächen an diesen anliegen.

Der Wicklungsdraht kann in mehreren Lagen in einer orthozyklischen Anordnung angeordnet sein.

### Kurzbeschreibung der Zeichnungen

Bevorzugte Ausführungsformen der vorliegenden Erfindung werden nachfolgend anhand der beigefügten Zeichnungen näher erläutert. Es zeigen:
- Figur 1: eine perspektivische Darstellung eines Wicklungsträgers;
- Figur 2: einen Ausschnitt, der einen Querschnitt durch eine Rillenstruktur des Wicklungsträgers darstellt; und
- Figur 3: einen Ausschnitt, der einen Zustand des bewickelten Wicklungsträgers nach einem Kalibriervorgang darstellt.

### Beschreibung von Ausführungsformen

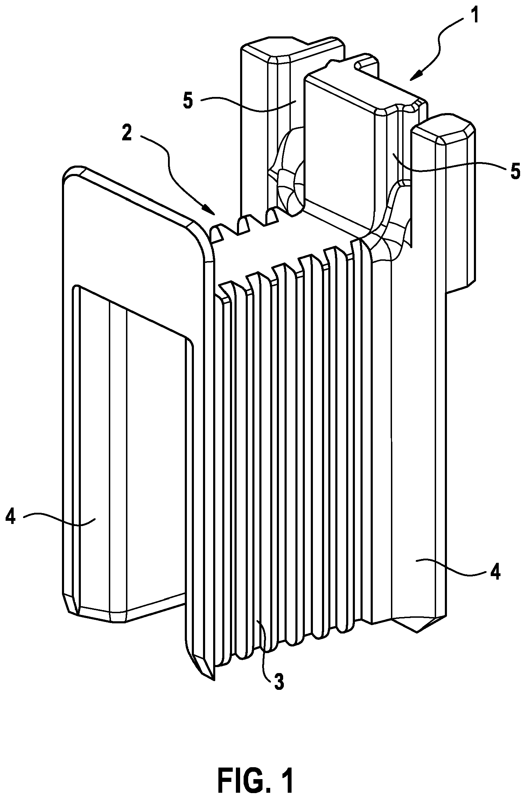

Figur 1 zeigt eine perspektivische Darstellung eines Wicklungsträgers 1 zum Aufsetzen auf einen Komponentenzahn einer elektrischen Maschine. Insbesondere kann der Wicklungsträger 1 zum Aufbau eines Stators für eine elektrische Maschine auf einen Statorzahn oder ein Statorzahnsegment aufgesetzt werden. Der Wicklungsträger 1 ist vorzugsweise aus einem elektrisch isolierenden Material, wie z. B. Kunststoff, ausgebildet.

Der Wicklungsträger 1 kann weiterhin einen zylindrischen Querschnitt aufweisen, so dass er in axialer Richtung auf einen Komponentenzahn aufgeschoben werden kann. Alternativ, wie in Figur 1 dargestellt, kann der Wicklungsträger 1 mit einer offenen Seite ausgebildet sein, so dass er seitlich auf einen Komponentenzahn aufgeschoben werden kann, insbesondere wenn dieser einen verbreiterten Zahnkopf aufweist. Zur vollständigen Isolation des Komponentenzahns von der Wicklung müssen dann zwei derartige Wicklungsträger von gegenüberliegenden Seiten auf den Komponentenzahn aufgesetzt werden.

Der Wicklungsträger 1 weist einen im Wesentlichen zylinderförmigen Wicklungsabschnitt 2 auf, der, wie in Figur 1 dargestellt, dreiseitig aber auch zweiseitig oder vierseitig (zum vollständigen Umschließen des Statorzahns) ausgebildet sein kann. Der Wicklungsträger 1 ist in axialer Richtung durch hoch stehende Begrenzungen 4 in einer von der Achse wegführenden Richtung begrenzt. Die Begrenzungen 4 verhindern ein Abrutschen von Windungen von einer auf den Wicklungsträger 1 aufgebrachten Spulenwicklung, indem sie eine seitliche Begrenzung für die Spulenwicklung bilden.

Der zylinderförmige Abschnitt 2 ist ganz oder teilweise mit Rillenstrukturen 3 versehen, die sich jeweils quer zur axialen Richtung des Wicklungsträgers 1 erstrecken. Die Rillenstrukturen 3 bestimmen die Anordnung von Abschnitten eines Wicklungsdrahts 8, der auf diesen Wicklungsträger 1 zu wickeln ist, in seiner Wurzellage. Durch die definierte Anordnung des Wicklungsdrahts 8 in der Wurzellage wird im Allgemeinen auch die Lage der Windungen der darauf folgenden Wicklungslagen vorgegeben, indem sich der Wicklungsdraht 8 in die entsprechenden Zwischenräume der Windungen in der Wurzellage einfügt. Weiterhin kann der Wicklungsträger 1 Klemmschlitze 5 vorsehen, die die beiden Enden der Spulenwicklung fixieren.

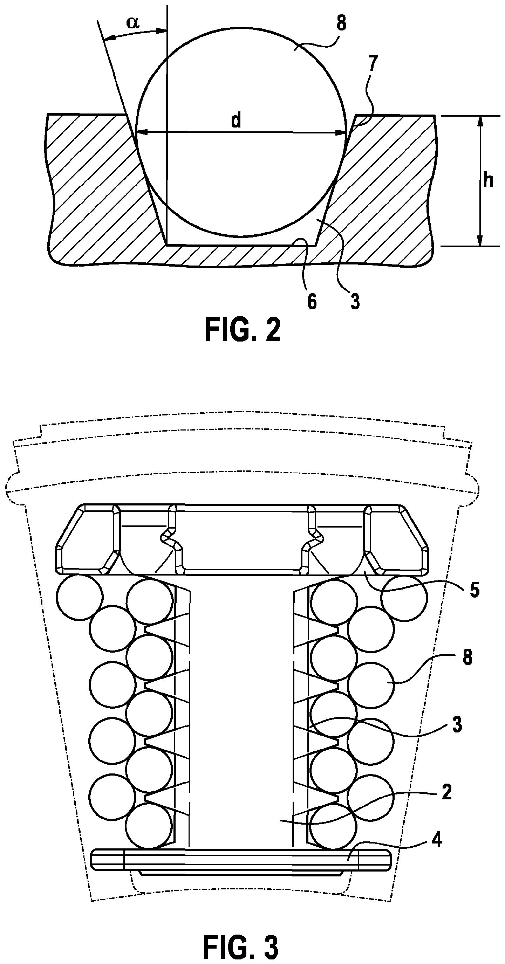

In Figur 2 ist ein Querschnitt durch eine Rillenstruktur 3 mit einem eingelegten Wicklungsdraht 8 im Detail dargestellt. Man erkennt, dass der Querschnitt der Rillenstruktur 3 im Wesentlichen trapezförmig mit einer parallel zur Wicklungsebene verlaufenden Bodenfläche 6 und dazu in einem Winkel α bezüglich der Tiefenrichtung geneigten, ebenen Seitenflächen 7 gebildet ist. Die Neigung der Seitenflächen 7 ist so vorgesehen, dass sich die Breite der Rillenstruktur 3 in einer zur Bodenfläche 6 entgegengesetzten Richtung verbreitert. Der eingelegte Wicklungsdraht 8 stößt an beide Seitenflächen 7 an und wird aufgrund ihrer Neigung bezüglich der axialen Position durch diese gehalten.

Vorzugsweise ist die Breite der Bodenfläche 6 so vorgesehen, dass der Wicklungsdraht 8 an den Seitenflächen 7 gehalten wird, ohne dass der Wicklungsdraht 8 die Bodenfläche 6 berührt. Insbesondere weist die Rillenstruktur 3 eine Tiefe h auf, die größer ist als der halbe Durchmesser d/2 des Wicklungsdrahts 8. Es sind jedoch auch Rillenstrukturen 3 mit einer Tiefe h denkbar, die kleiner ist als der halbe Durchmesser d/2 des Wicklungsdrahtes 8. Die Neigung der Seitenflächen 7 beträgt jeweils zwischen 10° und 40°, vorzugsweise 20°. Die Neigung der Seitenflächen 7 kann gleich oder unterschiedlich sein.

Der Abstand der Wicklungsdrähte 8 von den jeweiligen Bodenflächen 6 der Rillenstruktur 3 in der Wurzellage beträgt vor dem Kalibrierprozess vorzugsweise das 1- bis 100-fache der Breite einer den Wicklungsdraht 8 umgebenden Isolierungsschicht. Dieser Abstand ist vorzugsweise so gewählt, dass er durch Einwirken einer Kraft in Richtung der Bodenfläche 6 überwunden werden kann, und zwar entweder durch Verformung der Seitenflächen 7 der Rillenstruktur 3 oder durch die Verformung des Wicklungsdrahts 8.

Alternativ kann der Querschnitt der Rillenstruktur 3 auch dreieckförmig sein, d. h. eine Bodenfläche 6 ist zwischen den einander gegenüberliegenden Seitenflächen 7 nicht vorgesehen. Eine solche Rillenstruktur 3 hat den Vorteil, dass sie besonders einfach vorzusehen ist.

In Figur 3 ist ein Querschnitt eines bewickelten Wicklungsträgers 1 dargestellt. Man erkennt zwei Wicklungslagen, die in einer so genannten orthozyklischen Wicklung angeordnet sind. Bei der orthozyklischen Wicklung liegen die Drähte einer Lage der Spulenwicklung zu mindestens 30% ihres Umfangs in den Tälern zwischen den einzelnen Windungen der darunter liegenden Lage, um eine besonders hohe Wicklungsdichte zu erreichen. Dadurch wirkt aber auch eine hohe Kraft auf benachbarte Windungen der jeweils darunter liegenden Wicklungslage. Durch die vorgeschlagene Geometrie der Rillenstrukturen 3 wird diese Kraft von den Seitenflächen 7 der Rillenstrukturen 3 aufgenommen und der Wicklungsdraht 8 an seiner Position gehalten.

Mit dem Einsatz einer Zweipunktauflage wird die axiale Verschiebung der Wicklungsdrähte 8 bei der Herstellung der Spulenwicklungen auf dem Wicklungsträger 1 verhindert. Dadurch ist die Verarbeitung von Wicklungsdrähten 8 unterschiedlicher Dicke innerhalb eines vorgegebenen Toleranzbereichs möglich. Weiterhin verhindert das Vorsehen von zwei Kontaktstellen an den Seitenflächen 7 ein Aufspreizen der einzelnen Windungen der Wurzellage, wenn eine weitere Lage von Windungen aufgebracht wird. Mit anderen Worten kann die Lage der Windungen in der Wurzellage nicht durch Druck der Windungen von darauf angeordneten Lagen verändert werden.

Neben der deutlich verbesserten Fixierung des Wicklungsdrahts 8 durch die Wicklungsträger 1 mit einer Zweipunktauflage wirkt sich die Form der Rillenstruktur 3 mit geneigten Seitenflächen 7 ebenfalls positiv auf die Wärmeableitung in den Wicklungsträger 1 aus. Durch den zweifachen Kontakt an den Kontaktstellen des Wicklungsdrahts 8 mit dem Wicklungsträger 1 verdoppelt sich der Bereich des Wärmeübergangs. Dies wirkt sich mittelbar auf den Wärmeübergangswiderstand aus und reduziert diesen, wodurch die Wärmeabfuhr der gesamten elektrischen Maschine, in der der so bewickelte Wicklungsträger 1 verwendet wird, verbessert wird.

Durch das Vorsehen der Kontaktstellen an den geneigten Seitenflächen 7 ist es bei einem Kalibrierprozess, bei dem nach dem Bewickeln des Wicklungsträgers 1 die Wicklung in Richtung des Wicklungsträgers 1 gepresst wird, möglich, dass eine weitere Kontaktstelle durch eine Berührung des Wicklungsdrahts 8 an einer der Bodenfläche 6 zugewandten Stelle entsteht. Dadurch kann ein zusätzlicher Wärmeübergangsbereich gebildet werden.

## Patentansprüche

1. Wicklungsträger (1) zum definierten Aufbringen einer Spulenwicklung, umfassend:
- einen Wicklungsabschnitt (2) zum Aufsetzen auf einen Komponentenzahn einer elektrischen Maschine;
- eine Rillenstruktur (3), die in mindestens einem Bereich des Wicklungsabschnitts angeordnet ist und sich quer zur Wicklungsachse erstreckt, um einen Wicklungsdraht aufzunehmen;
wobei die Rillenstruktur (3) einen Querschnitt mit zwei einander gegenüberliegenden, geneigten ebenen Seitenflächen (7) aufweist, die sich in Richtung einer Bodenfläche (6) der Rillenstruktur (3) verjüngen, wobei der Querschnitt der Rillenstruktur (3) trapezförmig oder dreiecksförmig ist, wobei ein Winkel (α) einer oder beider Seitenflächen (7) zwischen 10° und 40° bezüglich einer Tiefenrichtung der Rillenstruktur (3) beträgt.

2. Wicklungsträger (1) nach Anspruch 1, der zum Aufbau eines Stators für die elektrische Maschine auf einen Statorzahn oder ein Statorzahnsegment aufsetzbar ist, und aus Kunststoff gefertigt ist.

3. Wicklungsträger (1) nach einem der Ansprüche 1 bis 2, wobei eine Begrenzung an mindestens einem axialen Ende des Wicklungsabschnitts vorgesehen ist, die sich senkrecht in Richtung zur Wicklungsachse nach außen erstreckt.

4. Wicklungsanordnung mit einem Wicklungsträger (1) nach einem der Ansprüche 1 bis 3, wobei ein Wicklungsdraht (8) in die Rillenstruktur (3) des Wicklungsabschnitts (2) eingebracht ist.

5. Wicklungsanordnung nach Anspruch 4, wobei der Durchmesser des Wicklungsdrahts (8) und der Querschnitt der Rillenstruktur (3) so aufeinander abgestimmt sind, dass der Wicklungsdraht (8) an beiden Seitenflächen (7) anliegt.

6. Wicklungsanordnung nach Anspruch 5, wobei zwischen dem Wicklungsdraht (8) und einer Bodenfläche (6) der Rillenstruktur (3) ein Abstand vorgesehen ist.

7. Wicklungsanordnung nach Anspruch 5, wobei der Wicklungsdraht (8) eine Bodenfläche (6) der Rillenstruktur (3) berührt und unter Verformung der Seitenflächen an diesen anliegt.

8. Wicklungsanordnung nach einem der Ansprüche 4 bis 7, wobei der Wicklungsdraht (8) in mehreren Lagen in einer orthozyklischen Anordnung angeordnet ist.

## Claims

1. Winding support (1) for the defined fitting of a coil winding, comprising:
- a winding section (2) which is to be placed onto a component tooth of an electrical machine;
- a groove structure (3) which is arranged in at least one region of the winding section and extends transversely to the winding axis in order to receive a winding wire;
wherein the groove structure (3) has a cross section with two mutually opposite, inclined, flat side faces (7) which taper in the direction of a bottom face (6) of the groove structure (3), wherein the cross section of the groove structure (3) is trapezoidal or triangular, wherein an angle of one or both side faces (7) in relation to a depth direction of the groove structure (3) is between 10° and 40°.

2. Winding support (1) according to Claim 1 which can be placed on a stator tooth or a stator tooth segment in order to design a stator for the electrical machine, and is manufactured from plastic.

3. Winding support (1) according to either of Claims 1 and 2, wherein a boundary is provided at at least one axial end of the winding section, the said boundary extending outward perpendicularly in the direction of the winding axis.

4. Winding arrangement comprising a winding support (1) according to one of Claims 1 to 3, wherein a winding wire (8) is introduced into the groove structure (3) of the winding section (2).

5. Winding arrangement according to Claim 4, wherein the diameter of the winding wire (8) and the cross section of the groove structure (3) are matched to one another such that the winding wire (8) rests against the two side faces (7).

6. Winding arrangement according to Claim 5, wherein a distance is provided between the winding wire (8) and a bottom face (6) of the groove structure (3).

7. Winding arrangement according to Claim 5, wherein the winding wire (8) touches a bottom face (6) of the groove structure (3) and, with deformation of the side faces, rests against the said side faces.

8. Winding arrangement according to one of Claims 4 to 7, wherein the winding wire (8) is arranged in an orthocyclic arrangement in several layers.

## Revendications

1. Support d'enroulement (1) pour l'application définie d'un enroulement de bobine, comprenant :
- une partie d'enroulement (2) à poser sur une dent de composant d'une machine électrique ;
- une structure rainurée (3) qui est disposée dans au moins une zone de la partie d'enroulement et s'étend transversalement à l'axe d'enroulement pour recevoir un fil d'enroulement ;
dans lequel la structure rainurée (3) présente une section transversale avec deux surfaces latérales (7) planes, inclinées et opposées l'une à l'autre qui s'amincissent en direction d'une surface de fond (6). de la structure rainurée (3), la section transversale de la structure rainurée (3) étant trapézoïdale ou triangulaire, un angle (α) d'une ou des deux surfaces latérales (7) étant compris entre 10° et 40° par rapport à une direction de profondeur de la structure rainurée (3).

2. Support d'enroulement (1) selon la revendication 1, qui peut être posé sur une dent de stator ou un segment de dent de stator pour la réalisation d'un stator pour la machine électrique, et qui est fabriqué en matière plastique.

3. Support d'enroulement (1) selon l'une quelconque des revendications 1 à 2, dans lequel une limite est prévue à au moins une extrémité axiale de la partie d'enroulement qui s'étend verticalement en direction de l'axe d'enroulement vers l'extérieur.

4. Ensemble d'enroulement comprenant un support d'enroulement (1) selon l'une quelconque des revendications 1 à 3, dans lequel un fil d'enroulement (8) est introduit dans la structure rainurée (3) de la partie d'enroulement (2).

5. Ensemble d'enroulement selon la revendication 4, dans lequel le diamètre du fil d'enroulement (8) et la section transversale de la structure rainurée (3) sont adaptés l'un à l'autre de telle sorte que le fil d'enroulement (8) est appliqué contre les deux surfaces latérales (7).

6. Ensemble d'enroulement selon la revendication 5, dans lequel un espacement est prévu entre le fil d'enroulement (8) et une surface - de fond (6) de la structure rainurée (3).

7. Ensemble d'enroulement selon la revendication 5, dans lequel le fil d'enroulement (8) touche une surface de fond (6) de la structure rainurée (3) et s'applique contre celle-ci sous l'effet d'une déformation des surfaces latérales.

8. Ensemble d'enroulement selon l'une quelconque des revendications 4 à 7, dans lequel le fil d'enroulement (8) est disposé en plusieurs couches dans un agencement orthocyclique.
